# EUROPÄISCHE PATENTANMELDUNG

(11) **EP 3 015 698 A1**
(43) Veröffentlichungstag der Anmeldung: **04.05.2016**
(21) Anmeldenummer: 14191346.7
(22) Anmeldetag: 31.10.2014
(51) Int. Cl.: F02M 21/02, F02D 19/06, F02D 19/02, F16J 15/40

(54) **Gaszuführsystem mit Schaftabdichtung und Zylinder für eine Hubkolbenbrennkraftmaschine, Hubkolbenbrennkraftmaschine, sowie Verfahren zum Betreiben einer Hubkolbenbrennkraftmaschine**

(71) Anmelder: Winterthur Gas & Diesel AG, 8401 Winterthur (CH)
(72) Erfinder: Nylund, Ingemar, 66580 Kuni (FI); Ott, Marcel, 8406 Winterthur (CH); Hattar, Christer, 8523 Hagenbuch (CH); Hensel, Sebastian, 9500 Wil (CH)
(74) Vertreter: Intellectual Property Services GmbH

(57) **Zusammenfassung**

Die Erfindung betrifft ein Gaszuführsystem (1) für eine Hubkolbenbrennkraftmaschine, insbesondere längsgespülter Zweitakt-Grossdieselmotor, wobei das Gaszuführsystem (1) ein Gaseinlassventil (2) mit einer Gaseinlassdüse (3) umfasst, die so ausgestaltet ist, dass sie in einer Zylinderwand (41) eines Zylinders (4) der Hubkolbenbrennkraftmaschine derart anordenbar ist, dass ein als Treibstoff bereitgestelltes Brenngas (5) im Einbauzustand des Gaszuführsystems (1) mittels der Gaseinlassdüse (3) einem Brennraum (42) des Zylinders (4) zuführbar ist. Erfindungsgemäss ist der Ventilschaft (61) in einer Führungsbohrung (91) eines Schaftgehäuses (9) geführt und die Führungsbohrung (91) ist mit einem unter einem Abdichtdruck (PA) stehenden Hydrauliköl (10) beaufschlagbar, welcher Abdichtdruck (PA) bevorzugt höher ist als ein Brenngasdruck (BG) des Brenngases (5) im Druckraum (22), so dass ein Eindringen des Brenngases (5) in den Ventilschaft (61) im Wesentlichen verhinderbar ist. Die Erfindung betrifft weiter einen Zylinder und eine Hubkolbenbrennkraftmaschine mit einem Gaszuführsystem (1) sowie ein Verfahren zum Betreiben einer Hubkolbenbrennkraftmaschine.

## Beschreibung

Die Erfindung betrifft eine Gaszuführung mit Schaftabdichtung für eine Hubkolbenbrennkraftmaschine, eine Hubkolbenbrennkraftmaschine und einen Zylinder mit einer Gaszuführung, im Speziellen für einen längsgespülten Zweitakt-Grossdieselmotor, sowie ein Verfahren zum Betreiben einer Hubkolbenbrennkraftmaschine gemäss dem Oberbegriff des unabhängigen Anspruchs der jeweiligen Kategorie.

Grossdieselmotoren werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten solcher grossbohrigen langsam laufenden Dieselmotoren ein bestimmender Faktor für die Länge der Wartungsintervalle, die Verfügbarkeit und über den Schmiermittelverbrauch auch unmittelbar für die Betriebskosten und damit für die Wirtschaftlichkeit.

Ein weiterer wesentlicher Punkt ist seit einigen Jahren mit zunehmender Bedeutung die Qualität der Abgase, insbesondere die Stickoxid Konzentration in den Abgasen. Hier werden die rechtlichen Vorgaben und Grenzwerte für die entsprechenden Abgasgrenzwerte zunehmend verschärft und in naher Zukunft auch noch weiter verschärft werden. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen zunehmend problematischer wird, weil die Einhaltung der Abgasgrenzwerte immer schwieriger, technisch aufwändiger und damit teurer wird oder am Ende deren Einhaltung gar nicht mehr sinnvoll möglich ist, so dass die entsprechenden Motoren ausser Betrieb genommen oder zumindest aufwändig umgerüstet werden müssen.

In der Praxis besteht daher bereits seit langem das Bedürfnis nach sogenannten "Dual Fuel" Motoren, also Motoren, die mit zwei unterschiedlichen Treibstoffen betrieben werden können. Dabei soll häufig einerseits Gas, z.B. in Form eines Erdgases, beispielsweise ein sogenanntes "liquefied natural gas" (LNG), oder ein Gas in Form eines Autogases oder eines anderen zum Antrieb einer Brennkraftmaschine geeigneten Gases verbrannt werden, und andererseits soll auch noch ein anderer Treibstoff wie Benzin, Diesel, Schweröl oder ein anderer geeigneter flüssiger Treibstoff in ein und demselben Motor verbrannt werden können. Die Motoren können dabei sowohl Zweitakt- als auch Viertaktmotoren sein und es kann sich dabei um kleine, mittelgrosse aber auch um Grossmotoren, insbesondere auch um längsgespülte Zweitakt-Grossdieselmotoren handeln, wie sie zum Beispiel als Antriebsaggregate in Schiffen verwendet werden oder auch zur Herstellung elektrischer Energie in Kraftwerken häufig eingesetzt werden.

Aber auch reine Gasmotoren, also Motoren, die nur mit Gas und nicht alternativ noch mit Diesel, Schweröl oder einem anderen Brennstoff betreibbar sind werden zunehmend nachgefragt, insbesondere dann, wenn hohe Abgasstandards gefordert sind, die mit vertretbarem technischen Aufwand wirtschaftlich sinnvoll nur durch die Verbrennung von Gas eingehalten werden können. Ein solcher reiner Gasmotor ist beispielweise in der WO 2010 147071 A1 angegeben. Weiterer Stand der Technik findet sich z.B. in der DE 10 2010 005814 A1.

Ganz gleich ob es sich um einen Dual-Fuel Motor oder um einen reinen Gasmotor handelt ist der Vorgang der Einbringung des Brennstoffs Gas in den Brennraum des Zylinders einer entsprechenden Hubkolbenbrennkraftmaschine von entscheidender Bedeutung für den zuverlässigen und sicheren Betrieb eines solchen Motors.

Das Gaszuführsystem zum Zuführen des Brennstoffs Gas in den Brennraum der Hubkolbenbrennkraftmaschine hat dabei ein Vielzahl von verschiedenen Funktionen, die sich zudem in gewisser Weise untereinander beeinflussen, so dass die verschiedenen Teil-Funktionalitäten genau aufeinander abgestimmt werden müssen. Ausserdem kann die genaue Ausgestaltung des Gaszuführsystems z.B. unter anderem von einem gegebenen oder bevorzugten Betriebszustand abhängen, beispielsweise ob der Motor meistens im Vollast- oder Teillastbereich betrieben wird oder häufig zwischen diesen Betriebsarten gewechselt werden muss. Oder ob es sich z.B. um einen Dual-Fuel Motor oder um einen reinen Gasmotor handelt. Oder die konkrete Ausgestaltung des Gaszuführsystems kann auch von der Baugrösse des Motors, dessen Leistung, Hubraum, bevorzugtem Drehzahlbereich oder anderen dem Fachmann an sich bekannten Bauvarianten oder Betriebszuständen einer Hubkolbenbrennkraftmaschine abhängen.

Insbesondere bei Zweitakt-Grossdieselmotoren hat dabei das Gaszuführsystem nicht nur die Funktion die in den Brennraum des Motors einzubringende Menge an Gas zu dosieren, so wie es bei Viertakt-Motoren oft eine ausreichende Anforderung ist. Bei Zweitakt-Grossdieselmotoren ist unter anderem neben weiteren Anforderungen die korrekte und zuverlässige Mischung des durch das Gaszuführsystem eingebrachten Gases mit der Spülluft ein entscheidender Punkt.

Ein weiterer wesentlicher Punkt betrifft die Betriebssicherheit des Motors. Im Falle dass das Gaszuführsystem ganz oder teilweise versagt ist es möglich, dass z.B. eine viel zu grosse Menge an Gas in den Brennraum des Motors eingebracht wird, wenn keine geeigneten Sicherheitsmassnahmen getroffen werden, die das verhindern. Solche übermässig grossen Mengen Gas im Brennraum des Motors können z.B. zu unkontrollierten Explosionen im Abgassystem oder im Spülsystem eines Grossdieselmotors führen, was dazu führen kann, dass die entsprechenden Komponenten überhitzt oder gar beschädigt werden, so dass im schlimmsten Fall die ganze Maschine ausfallen kann, was insbesondere bei Schiffen auf hoher See fatale Folgen und sogar den Verlust des ganzen Schiffes zur Folge haben kann.

Aber auch wenn die Folgen einer solchen Fehlfunktion nicht so dramatisch sind können auch weniger gravierende Störungen dieser Art unerwünschte Nachteile mit sich bringen.

Wenn beispielweise aufgrund eines Defektes das Gaszuführsystem jeweils eine etwas zu grosse oder eine etwas zu kleine Menge an Gas in den Brennraum des Motors eingebracht wird, kann das die Abgaswerte, wie beispielweise den Stickoxidgehalt oder andere Abgaswerte deutlich negativ beeinflussen.

Oder aber beim Betrieb mit einem Gas, z.B. mit dem oben erwähnten LNG, kann es bei einer Fehlfunktion des Gaszuführsystems beispielweise zu einer unvollständigen Verbrennung und damit zu einem dem Fachmann als CH₄-Schlupf bekannten Phänomen führen, bei welchem zu hohe Werte CH₄-erreicht werden. Wenn ein entsprechender Motor nun mit Gas, also in einem Gasmodus betrieben wird, können die unter einer Fehlfunktion des Gaszuführsystems bei der Verbrennung entstehenden Abgase unter anderem nicht unerhebliche Mengen Methan und / oder Formaldehyd Emissionen enthalten, die zum Beispiel aus einer spontanen Abkühlung der Verbrennungsflamme ("flame quenching") beim Verbrennungsvorgang an der Zylinderwand resultieren können oder in einer Phase frei werden können, in der die Spülung des Zylinders mit Frischluft bei gleichzeitig nicht geschlossenem Auslassventil stattfindet oder in anderer Weise frei werden können.

Ähnliche Effekte können auftreten, wenn das Gas in nicht geeigneter Weise, z.B. unter einem ungeeigneten Druck oder in einer ungeeigneten Geometrie des Einspritzstrahls, unter einem ungeeigneten Winkel, an einer ungeeigneten Stelle in den Brennraum oder in irgendeiner anderen Weise ungeeignet in den Brennraum des Motors eingebracht wird.

Wenn durch solche Betriebszustände z.B. die Methan Konzentration im Abgas entsprechend hoch ist, kann dadurch der sichere Betrieb des Motors ebenfalls beeinträchtigt werden. Zum Beispiel besteht die Gefahr, dass sich das Methan im Abgassystem, z.B. im Abgassammelrohr bzw. in einem Bereich vor oder gar im Turbolader entzündet. Im schlimmsten Fall kann die Entzündung des Methans im Abgassystem zur Beschädigung entsprechender Komponenten führen, die den schädlichen Wirkungen der Methangasentzündung ausgesetzt sind. Ausserdem ist Methan ein überaus wirksames Treibhausgas, das bekannterweise mindestens 25 mal wirksamer ist als Kohlendioxid, was einen signifikanten negativen Einfluss auf die Berechnung des sogenannten "Energy Efficiency Design Index" (EEDI) haben kann.

Auch können die häufig eingesetzten und sehr empfindlichen Oxidationskatalysatoren durch eine Fehlfunktion des Abgaszuführsystems und die daraus resultieren Folgen erheblich beeinträchtigt und im schlimmsten Fall bereits nach kurzer Zeit irreparabel beschädigt werden, wodurch der weitere sichere und zuverlässige Betrieb des Motors zumindest in Frage gestellt ist, im schlimmsten Fall verunmöglicht wird.

Die Aufgabe der Erfindung ist es somit ein Gaszuführsystem, einen Zylinder, insbesondere einen Zylinderliner für einen längsgespülten Zweitakt-Grossdieselmotor mit einem Gaszuführsystem, bzw. eine Hubkolbenbrennkraftmaschine, insbesondere einen längsgespülten Zweitakt-Grossdieselmotor mit einem Gaszuführsystem zur Verfügung zu stellen, das bzw. welche flexibel an unterschiedliche Motoren bzw. unterschiedliche Betriebszustände und Anforderungen anpassbar ist bzw. sind, so dass dies eventuell auch in bestimmten Fällen in älteren Motoren nachgerüstet werden kann, bzw. bestehende Motoren flexibel und einfach auf andere Betriebsarten oder Betriebszustände umgerüstet bzw. umgestellt werden können. Dabei soll das sichere Einbringen des Gases in den Brennraum der Hubkolbenbrennkraftmaschine zuverlässig gewährleistet sein und insbesondere, aber nicht nur im Fall von langsgespülten Zweitakt-Grossdieselmotoren im Brennraum eine optimale Mischung mit der Spülluft gewährleistet werden. Ausserdem soll das Gaszuführsystem und seine Komponenten zuverlässig gegen Leckagen gesichert sein.

Die diese Aufgaben lösenden Gegenstände der Erfindung sind durch die Merkmale der unabhängigen Ansprüche 1, 12, 14 und 15 gekennzeichnet.

Die jeweiligen abhängigen Ansprüche beziehen sich auf besonders vorteilhafte Ausführungsformen der Erfindung.

Die Erfindung betrifft somit ein Gaszuführsystem für eine Hubkolbenbrennkraftmaschine, insbesondere längsgespülter Zweitakt-Grossdieselmotor, wobei das Gaszuführsystem ein Gaseinlassventil mit einer Gaseinlassdüse umfasst, die so ausgestaltet ist, dass sie in einer Zylinderwand eines Zylinders der Hubkolbenbrennkraftmaschine derart anordenbar ist, dass ein als Treibstoff bereitgestelltes Brenngas im Einbauzustand des Gaszuführsystems mittels der Gaseinlassdüse einem Brennraum des Zylinders zuführbar ist. Dabei umfasst das Gaseinlassventil einen in einem Ventilgehäuse angeordneten Druckraum, in welchem das Brenngas über eine Gaszuführung zur Bevorratung und Zufuhr in die Gaseinlassdüse im Betriebszustand bereitgestellt werden kann. Im Druckraum ist ein Gaseinlassventil mit einem an einem Ventilschaft angeordneten Ventilteller sowie einem Ventilsitz vorgesehen, welcher Ventilsitz in einem geschlossenen Zustand des Gaseinlassventils mit dem Ventiltellers derart dichtend zusammenwirkt, dass die Zufuhr des Brenngases aus dem Druckraum in die Gaseinlassdüse unterbunden ist, und der Ventilteller mittels eines mit dem Ventilschaft wirkverbundenen Ventilantriebs vom Ventilsitz abhebbar ist, so dass das Brenngas in einem geöffneten Zustand des Gaseinlassventils aus dem Druckraum am Ventilteller vorbei der Gaseinlassdüse zuführbar ist. Erfindungsgemäss ist der Ventilschaft in einer Führungsbohrung eines Schaftgehäuses geführt und die Führungsbohrung ist mit einem unter einem Abdichtdruck stehenden Hydrauliköl beaufschlagbar, welcher Abdichtdruck bevorzugt höher ist als ein Brenngasdruck des Brenngases im Druckraum ist, so dass ein Eindringen des Brenngases in den Ventilschaft im Wesentlichen verhinderbar ist.

Gemäss der Erfindung ist der Ventilschaft in einer Führungsbohrung eines Schaftgehäuses geführt, wobei die Führungsbohrung zur Abdichtung gegen den Gasdruck des Brenngases im Druckraum mit einem unter einem Abdichtdruck stehenden Hydrauliköl beaufschlagbar, welcher Abdichtdruck bevorzugt höher ist als ein Brenngasdruck des Brenngases im Druckraum, so dass ein Eindringen des Brenngases in den Ventilschaft im Wesentlichen verhinderbar ist.

Dass der Abdichtdruck bevorzugt höher ist als ein Brenngasdruck des Brenngases im Druckraum ist deshalb notwendig, weil kein Brenngas entlang des Ventilschafts unkontrolliert in weitere Komponenten des Gaszuführsystems, insbesondere nicht in einen hydraulischen Antrieb des Ventilschafts eintreten darf, also keine bzw. nur sehr gut kontrollierte kleine, technisch unwesentliche Gas-Lecks am bzw. entlang des Ventilschafts auftreten dürfen. Daher muss der Ventilschaft entsprechend zuverlässig abgedichtet werden, was bei den bisherigen System z.B. mit entsprechenden Dichtungsringen versucht wurde, was sich aber alles in allem eher als nachteilig erwiesen hat, weil die Dichtringe gegenüber dem unter Druck stehenden Brenngas entweder keine ausreichende Dichtwirkung zeigen oder auch z.B. zu schnell durch im Betriebszustand auftretende Reibungsphänomene verschleissen und damit letztlich zu teuer und zu unzuverlässig sind.

Das Gaseinlasssystem ist dabei bevorzugt so ausgestaltet, dass der Ventilantrieb zum Antrieb des Ventilschafts ein mechanischer, elektrischer, oder pneumatischer Ventilantrieb, insbesondere ein hydraulischer Ventilantrieb ist, wobei zum Schliessen des Gaseinlassventils besonders bevorzugt eine gegen den Ventilantrieb wirkende Rückstelleinrichtung, insbesondere in Form einer Rückstellfeder vorgesehen ist.

Ein weiterer wesentlicher Punkt der ebenfalls die Betriebssicherheit des Motors betrifft ist die Kontrolle der in den Zylinder einfliessenden Menge an Brenngas. Im dem Fall, dass das Gaszuführsystem ganz oder teilweise versagt ist es möglich, dass z.B. eine viel zu grosse Menge an Gas in den Brennraum des Motors eingebracht wird, wenn keine geeigneten Sicherheitsmassnahmen getroffen werden, die das verhindern. Solche übermässig grossen Mengen Brenngas im Brennraum des Motors können z.B. zu unkontrollierten Explosionen im Abgassystem oder im Spülsystem eines Grossdieselmotors führen, was dazu führen kann, dass die entsprechenden Komponenten überhitzt oder gar beschädigt werden, so dass im schlimmsten Fall die ganze Maschine ausfallen kann, was insbesondere bei Schiffen auf hoher See fatale Folgen und sogar den Verlust des ganzen Schiffes zur Folge haben kann.

Aber auch wenn die Folgen einer solchen Fehlfunktion nicht so dramatisch sind können auch weniger gravierende Störungen dieser Art unerwünschte Nachteile mit sich bringen.

Wenn beispielweise aufgrund eines Defektes das Gaszuführsystem jeweils eine etwas zu grosse oder eine etwas zu kleine Menge an Gas in den Brennraum des Motors eingebracht wird, kann das die Abgaswerte, wie beispielweise den Stickoxidgehalt oder andere Abgaswerte deutlich negativ beeinflussen.

Oder aber beim Betrieb mit einem Gas, z.B. mit dem oben erwähnten LNG, kann es bei einer Fehlfunktion des Gaszuführsystems beispielweise zu einer unvollständigen Verbrennung und damit zu einem dem Fachmann als CH₄-Schlupf bekannten Phänomen führen, der zu hohe Werte aufweist. Wenn ein entsprechender Motor nun mit Gas, also in einem Gasmodus betrieben wird, können die unter einer Fehlfunktion des Gaszuführsystems bei der Verbrennung entstehenden Abgase unter anderem eine nicht unerhebliche Menge Methan und / oder Formaldehyd Emissionen enthalten, die zum Beispiel aus einer spontanen Abkühlung der Verbrennungsflamme ("flame quenching") beim Verbrennungsvorgang an der Zylinderwand resultieren können oder in einer Phase frei werden können, in der die Spülung des Zylinders mit Frischluft bei gleichzeitig nicht geschlossenem Auslassventil stattfindet oder in anderer Weise frei werden können.

Ähnliche Effekte können auftreten, wenn das Gas in nicht geeigneter Weise, z.B. unter einem ungeeigneten Druck oder in einer ungeeigneten Geometrie, des Einspritzstrahls, unter einem ungeeigneten Winkel, an einer ungeeigneten Stelle in den Brennraum oder in irgendeiner anderen Weise ungeeignet in den Brennraum des Motors eingebracht wird.

Wenn durch solche Betriebszustände z.B. die Methan Konzentration im Abgas entsprechend hoch ist, kann dadurch der sichere Betrieb des Motors ebenfalls beeinträchtigt werden. Zum Beispiel besteht die Gefahr, dass sich das Methan im Abgassystem, z.B. im Abgassammelrohr bzw. in einem Bereich vor oder gar im Turbolader entzündet. Im schlimmsten Fall kann die Entzündung des Methans im Abgassystem zur Beschädigung entsprechender Komponenten führen, die den schädlichen Wirkungen der Methangasentzündung ausgesetzt sind. Ausserdem ist Methan ein überaus wirksames Treibhausgas, das bekannterweise mindestens 25 mal wirksamer ist als Kohlendioxid, was einen signifikanten negativen Einfluss auf die Berechnung des sogenannten "Energy Efficiency Design Index" (EEDI) haben kann.

Auch können die häufig eingesetzten und sehr empfindlichen Oxidationskatalysatoren durch eine Fehlfunktion des Abgaszuführsystems und die daraus resultieren Folgen erheblich beeinträchtigt und im schlimmsten Fall bereits nach kurzer Zeit irreparabel beschädigt werden, wodurch der weitere sichere und zuverlässige Betrieb des Motors zumindest in Frage gestellt ist, im schlimmsten Fall verunmöglicht wird.

Auch diese zum Teil sehr gravierenden Probleme können durch die vorliegende Erfindung erstmals zuverlässig vermieden werden.

Dazu kann ein erfindungsgemässes Gaszuführsystem zur Überwachung eines Brenngasflusses in den Brennraum ein Kontrollsystem zur Bestimmung einer Position des Gaseinlassventils umfassen, wobei das Kontrollsystem ein Wegsensor, insbesondere ein elektrischer oder elektromagnetischer Wegsensor, im Speziellen ein induktiver, kapazitiver oder optischer Wegsensor sein, so dass die jeweilige Stellung des Ventils, insbesondere ob das Gaseinlassventil geöffnet oder geschlossen ist, jederzeit zuverlässig detektiert werden kann.

Besonders bevorzugt ist das Kontrollsystem dabei mit einer Überwachungseinheit signalverbunden, so dass die Position des Gaseinlassventils im Betriebszustand von der Überwachungseinheit erfasst werden kann, und so eine Brenngaszufuhr zur Gaseinlassdüse in Abhängigkeit von einem Kurbelwinkel der Hubkolbenbrennkraftmaschine und / oder in Abhängigkeit von einer Stellung eines Gaswechselventils der Hubkolbenbrennkraftmaschine unterbunden werden kann. Damit ist es durch die Erfindung erstmals möglich, eine Fehlfunktion des Gaszuführsystems nicht nur zu detektieren, sondern abhängig von der Fehlfunktion ein Sicherheitsprotokoll in Gang zu setzen, so das z.B. die Brenngaszufuhr zum Gaszuführsystem automatisch unterbunden und die Hubkolbenbrennkraftmaschine bevorzugt automatisch abgeschaltet wird, besonders bevorzugt automatisch auf einen Betrieb mit einem alternativen Brennstoff wie beispielweise Dieselöl oder Schweröl umgeschaltet wird.

In einem für die Praxis besonders bevorzugten Ausführungsbeispiel ist die Gaseinlassdüse lösbar mit dem Gaseinlassventil und austauschbar mit der Zylinderwand verbunden und eine Düsenachse der Gaseinlassdüse ist derart unter einem vorgebbaren Winkel in Bezug auf eine Ventilachse des Gaseinlassventils angeordnet, dass das Brenngas im Betriebs- und Einbauzustand des Gaszuführsystems unter einem von Null verschiedenen vorgebbaren Einspritzwinkel, bevorzugt unter einem Winkel zwischen 10Grad und 80Grad, besonders bevorzugt unter einem Winkel zwischen 30Grad und 50Grad, im speziellen unter ca. 45Grad in Bezug auf eine radiale Richtung, und / oder in Bezug auf eine axiale Richtung des Zylinders in den Brennraum des Zylinder einspritzbar ist.

Ein erfindungsgemässes Gaszuführsystem umfasst somit ein Ventil, das als wesentliche Elemente einen Ventilschaft mit einem Ventilteller aufweist, wobei durch das meist hydraulisch gesteuerte Ventil die gewünschte Menge an Gas über den Ventilteller, der im geschlossenen Zustand dichtend mit einem Ventilsitz zusammenwirkt, und eventuell durch Düsen und einen geeigneten Düsenkanal in den Brennraum eingebracht wird.

Damit steht durch die vorliegende Erfindung erstmals ein Gaszuführsystem zum Zuführen des Brennstoffs Gas in den Brennraum einer Hubkolbenbrennkraftmaschine zur Verfügung, das durch seine zweiteilige Ausgestaltung eine bisher nicht gekannte Flexibilität aufweist. Dadurch, dass die Gaseinlassdüse lösbar mit dem Gaseinlassventil und austauschbar mit der Zylinderwand verbunden ist, kann zum Beispiel je nach Anforderungen an die speziellen Brennbedingungen im Brennraum der Hubkolbenbrennkraftmaschine die Gaseinlassdüse separat vom Gaseinlassventil ausgetauscht werden, so dass verschiedene Einspritzbedingungen zum Einspritzen des Brenngases in den Brennraum einfach realisiert werden können und optimal auf wechselnde Anforderungen abgestimmt werden können.

Darüber hinaus ist eine Düsenachse der Gaseinlassdüse der vorliegenden Erfindung derart unter einem vorgebbaren Winkel in Bezug auf eine Ventilachse des Gaseinlassventils angeordnet, dass das Brenngas im Betriebs- und Einbauzustand des Gaszuführsystems unter einem von Null verschiedenen vorgebbaren Einspritzwinkel in Bezug auf eine radiale Richtung und / oder in Bezug auf eine axiale Richtung des Zylinders in den Brennraum des Zylinder einspritzbar ist. Das ist daher von besonderer Bedeutung, weil dadurch den beiden Hauptfunktionen der Gaseinlassdüse gleichzeitig Rechnung getragen wird: einerseits ist durch Verwendung einer an die Bedingungen im Brennraum angepassten Gaseinlassdüse eine exakte Dosierung unter den verschiedensten Betriebsbedingungen möglich. Und andererseits kann durch die korrekte Wahl des Einspritzwinkels und die richtige Wahl der Geometrie des Einspritzstrahls bzw. mehrerer Einspritzstrahlen eine optimale Mischung von Spülluft und Brenngas erreicht werden, so dass eine optimale Verbrennung gewährleistet ist, so dass insbesondere die geforderten Abgasnormen eingehalten werden können und andererseits der Verbrauch an Treibstoff minimiert werden kann.

Das heisst, eine Vielzahl von verschiedenen Funktionen, die sich zudem in gewisser Weise untereinander beeinflussen, können durch die vorliegende Erfindung erstmals genau aufeinander abgestimmt werden. So kann z.B. durch die genaue Ausgestaltung des Gaszuführsystems, im speziellen durch die Wahl einer geeigneten Gaseinlassdüse, unter anderem auf einen gegebenen oder bevorzugten Betriebszustand optimal abgestellt werden, beispielsweise ob der Motor meistens im Vollast- oder Teillastbereich betrieben wird oder häufig zwischen diesen Betriebsarten gewechselt werden muss. Oder die Gaseinlassdüse kann optimal in Abhängigkeit davon gewählt werden, ob es sich z.B. um einen Dual-Fuel Motor oder um einen reinen Gasmotor handelt. Oder die konkrete Ausgestaltung des Gaszuführsystems kann auch z.B. erstmals flexibel auf Baugrösse des Motors, dessen Leistung, Hubraum, bevorzugtem Drehzahlbereich oder anderen dem Fachmann an sich bekannten Bauvarianten oder Betriebszuständen der Hubkolbenbrennkraftmaschine eingestellt werden, ohne dass das gesamte Gaszuführsystem angepasst oder ausgewechselt werden müsste. Durch Verwendung eines erfindungsgemässen Gaszuführsystems braucht somit nur noch z.B. die Gaseinlassdüse geeignet gewählt und entsprechend ausgetauscht werden, während das Gaseinlassventil als solches beibehalten werden kann.

Insbesondere bei Zweitakt-Grossdieselmotoren hat dabei das Gaszuführsystem nicht nur die Funktion die in den Brennraum des Motors einzubringende Menge an Gas zu dosieren, so wie es bei Viertakt-Motoren oft eine ausreichende Anforderung ist. Bei Zweitakt-Grossdieselmotoren ist unter anderem wie bereits erwähnt neben weiteren Anforderungen die korrekte und zuverlässige Mischung des durch das Gaszuführsystem eingebrachten Gases mit der Spülluft ein entscheidender Punkt, dem durch das erfindungsgemässe Gaszuführsystem erstmals vollumfänglich Rechnung getragen wird.

Als weitere Massnahme kann gemäss der Erfindung die Gaseinlassdüse zur Verbesserung der Mischung des Brenngases mit der Spülluft bzw. um das Einbringen des Brenngases in den Zylinder weiter zu optimieren die Gaseinlassdüse auch eine Mehrzahl an Düsenöffnungen aufweisen.

Auch ist es möglich, dass zwei Düsenöffnungen derart verschieden ausgerichtet sind, dass das Brenngas unter zwei verschiedenen Einspritzwinkeln in den Brennraum einbringbar ist, wodurch z.B. eine bessere Verteilung im Brennraum erreicht werden kann.

Oder aber alternativ oder gleichzeitig können zwei Düsenöffnungen derart verschieden ausgebildet sein, dass das Brenngas durch die zwei Düsenöffnungen mit zwei verschiedenen Einspritzmengen und / oder mit zwei verschiedenen Strömungsgeschwindigkeiten und / oder mit zwei verschiedenen Strahlgeometrien in den Brennraum einbringbar iist.

Die Erfindung betrifft weiterhin einen Zylinder, insbesondere Zylinderliner eines längsbespülten Zweitakt-Grossdieselmotors mit einem oben eingehend beschriebenen Gaszuführsystem, wobei das Gaszuführsystem besonders bevorzugt am Zylinder in einem Bereich zwischen einem oberen Totpunkt und einem unteren Totpunkt eines Kolbens der Hubkolbenbrennkraftmaschine vorgesehen ist, im Speziellen in einem Bereich des Zylinders, der vom oberen Totpunkt oder vom unteren Totpunkt 20% bis 80%, bevorzugt 40% bis 60%, besonders bevorzugt ca. 50% des Abstands zwischen oberem Totpunkt und unterem Totpunkt entfernt ist. Es hat sich nämlich gezeigt, dass dadurch nicht nur eine noch optimalere Mischung des Brenngases mit der Spülluft erreichen lässt. Auch kann dadurch vermieden werden, dass Brenngas in heisse, sich noch im Zylinderliner befindliche Abgase eingespritzt wird, wodurch sich das Brenngas vorzeitig entzünden könnte, wie es der Fall sein kann, wenn sich das Gaszuführsystem wie aus dem Stand der Technik in der Nähe des oberen Totpunkts am Zylinderliner befindet.

Die Erfindung betrifft des Weiteren eine Hubkolbenbrennkraftmaschine mit einem oben beschriebenen Gaszuführsystem, wobei die Hubkolbenbrennkraftmaschine besonders bevorzugt ein Dual-Fuel Motor zur Verbrennung des Brenngases und alternativ zur Verbrennung eines weiteren Brennstoffs, insbesondere zur Verbrennung von Diesel oder Schweröl ist.

In einem anderen Ausführungsbeispiel kann eine erfindungsgemässe Hubkolbenbrennkraftmaschine aber selbstverständlich auch ein reiner Gasmotor sein, mit welchem nur Brenngas, also kein anderer Treibstoff verbrannt werden kann.

Nicht zuletzt betrifft die Erfindung auch ein Verfahren zum Betreiben einer Hubkolbenbrennkraftmaschine mit einem erfindungsgemässen Gaszuführsystem, wobei wie bereits beschrieben im Betriebszustand eine Fehlfunktion des Gaszuführsystems detektiert wird, die Brenngaszufuhr zum Gaszuführsystem unterbunden wird und die Hubkolbenbrennkraftmaschine bevorzugt automatisch abgeschaltet, besonders bevorzugt automatisch auf einen Betrieb mit einem alternativen Brennstoff wie beispielweise Dieselöl oder Schweröl umgeschaltet wird.

Im Folgenden wird die Erfindung an Hand der schematischen Zeichnung näher erläutert. Es zeigt:

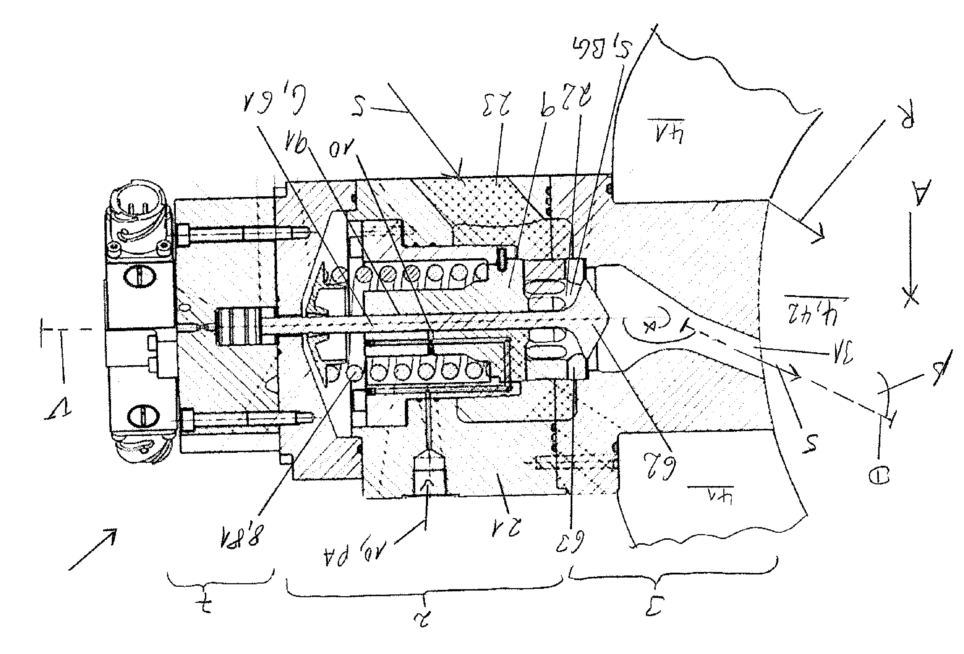

- Fig. 1: ein besonders bevorzugtes Ausführungsbeispiel eines erfindungsgemässen Gasführsystems mit Gaseinlassventil und Gaseinlassdüse.

Fig. 1 zeigt in einer schematischen Darstellung zur Erläuterung des Zusammenwirkens der unterschiedlichen Komponenten den prinzipiellen Aufbau eines erfindungsgemässen Gaszuführsystems an einem Zylinderliner einer Hubkolbenbrennkraftmaschine, die hier exemplarisch als Zweitakt-Grossdieselmotor mit Längsspülung ausgebildet ist und aus Gründen der Übersichtlichkeit aber nicht näher im Detail dargestellt ist, da dem Fachmann der prinzipielle Aufbau eines längsgespülten Zweitakt-Grossdieselmotors hinlänglich bekannt ist. Im Folgenden wird dabei das erfindungsgemässe Gaszuführsystem gesamthaft mit dem Bezugszeichen 1 bezeichnet.

Das spezielle Ausführungsbeispiel eines erfindungsgemässen Gaszuführsystem 1 gemäss Fig. 1, eingebaut in einen längsgespülten Zweitakt-Grossdieselmotor, umfasst ein Gaseinlassventil 2 mit einer Gaseinlassdüse 3, die so ausgestaltet ist und in einer Zylinderwand 41 eines Zylinders 4 der Hubkolbenbrennkraftmaschine angeordnet ist, dass ein als Treibstoff bereitgestelltes Brenngas 5 im Einbauzustand des Gaszuführsystems 1 mittels der Gaseinlassdüse 3 einem nicht näher dargestellten Brennraum 42 des Zylinders 4 zuführbar ist. Dabei umfasst das Gaseinlassventil 2 einen in einem Ventilgehäuse 21 angeordneten Druckraum 22, in welchem das Brenngas 5 über eine Gaszuführung 23 zur Bevorratung und Zufuhr in die Gaseinlassdüse 3 im Betriebszustand bereitgestellt werden kann.

Im Druckraum 22 selbst bzw. im Bereich des Druckraums 22 ist ein Gaseinlassventil 6 mit einem an einem Ventilschaft 61 angeordneten Ventilteller 62 sowie einem Ventilsitz 63 vorgesehen, welcher Ventilsitz 63 in einem geschlossenen Zustand des Gaseinlassventils 6 mit dem Ventilteller 2 derart dichtend zusammenwirkt, dass die Zufuhr des Brenngases 5 aus dem Druckraum 22 in die Gaseinlassdüse 3 unterbunden ist.

Dazu ist der Ventilteller 2 mittels eines mit dem Ventilschaft 61 wirkverbundenen Ventilantrieb 7 vom Ventilsitz 3 abhebbar, so dass das Brenngas 5 in einem geöffneten Zustand des Gaseinlassventils 6 aus dem Druckraum 22 am Ventilteller 2 vorbei an der Gaseinlassdüse 3 zuführbar ist.

Gemäss der vorliegenden Erfindung ist die Gaseinlassdüse 3 lösbar mit dem Gaseinlassventil 2 und austauschbar mit der Zylinderwand 41 verbunden, wobei eine Düsenachse D der Gaseinlassdüse 3 derart unter einem vorgebbaren Winkel α in Bezug auf eine Ventilachse V des Gaseinlassventils 2 angeordnet ist, dass das Brenngas 5 im Betriebs- und Einbauzustand des Gaszuführsystems 1 unter einem von Null verschiedenen vorgebbaren Einspritzwinkel β in Bezug auf eine radiale Richtung R und / oder in Bezug auf eine axiale Richtung A des Zylinders 4 in den Brennraum 42 des Zylinder 4 einspritzbar ist.

Die relativ einfache Gaseinlassdüse 3 hat dabei nur eine Düsenöffnung 31. In einem anderen speziellen Ausführungsbeispiel kann die Gaseinlassdüse 3 aber durchaus auch eine Mehrzahl an Düsenöffnungen 31 aufweisen, wobei z.B. zwei Düsenöffnungen 31 derart verschieden ausgerichtet sein können, dass das Brenngas 5 unter zwei verschiedenen Einspritzwinkeln in den Brennraum 42 einbringbar ist, und / oder wobei zwei Düsenöffnungen 31 auch oder gleichzeitig derart verschieden ausgebildet sein können, dass das Brenngas 5 durch die zwei Düsenöffnungen 31 mit zwei verschiedenen Einspritzmengen und / oder mit zwei verschiedenen Strömungsgeschwindigkeiten und / oder mit zwei verschiedenen Strahlgeometrien in den Brennraum 42 einbringbar ist.

Des Weiteren kann in der Praxis ein in Fig. 1 nicht explizit dargestelltes Kontrollsystem zur Überwachung eines Brenngasflusses in den Brennraum 42 zur Bestimmung einer Position des Gaseinlassventils 6 vorgesehen sein, welches Kontrollsystem besonders bevorzugt ein Wegsensor ist, insbesondere ein elektrischer oder elektromagnetischer Wegsensor, im Speziellen ein induktiver, kapazitiver oder optischer Wegsensor ist und das Kontrollsystem mit einer Überwachungseinheit signalverbunden ist, so dass die Position des Gaseinlassventils 6 im Betriebszustand von der Überwachungseinheit erfasst werden kann, und eine Brenngaszufuhr zur Gaseinlassdüse 3 in Abhängigkeit von einem Kurbelwinkel der Hubkolbenbrennkraftmaschine und / oder in Abhängigkeit von einer Stellung eines Gaswechselventils der Hubkolbenbrennkraftmaschine automatisch unterbunden werden kann.

Der Ventilantrieb 7 zum Antrieb des Ventilschafts 61 ist bei dem Ausführungsbeispiel gemäss Fig. 1 ein hydraulischer Ventilantrieb 7, dessen Funktion und Wirkungsweise dem Fachmann grundsätzlich bekannt sind. Zum Schliessen des Gaseinlassventils 6 ist eine gegen den Ventilantrieb 7 wirkende Rückstelleinrichtung 8 in Form einer Rückstellfeder 81 vorgesehen.

Der Ventilschaft 61 ist in einer Führungsbohrung 91 eines Schaftgehäuses 9 geführt, wobei die Führungsbohrung 91 mit einem unter einem Abdichtdruck PA stehenden Hydrauliköl 10 beaufschlagbar ist, welcher Abdichtdruck PA hier höher ist als ein Brenngasdruck BG des Brenngases 5 im Druckraum 22, so dass ein Eindringen des Brenngases 5 in den Ventilschaft 61 im Wesentlichen verhinderbar ist.

Es versteht sich, dass die in dieser Anmeldung beschriebenen Ausführungsbeispiele der Erfindung je nach Anwendung auch in jeder geeigneten Weise kombinierbar sind und dass insbesondere die in der Zeichnung dargestellten speziellen Ausführungsbeispiele lediglich exemplarisch zu verstehen sind. Der Fachmann erkennt sofort einfache vorteilhafte Weiterbildungen der beschriebenen Ausführungsbeispiele der Erfindung und versteht, dass auch solche einfachen Weiterbildungen selbstverständlich von der Erfindung erfasst sind.

## Patentansprüche

1. Gaszuführsystem für eine Hubkolbenbrennkraftmaschine, insbesondere längsgespülter Zweitakt-Grossdieselmotor, wobei das Gaszuführsystem ein Gaseinlassventil (2) mit einer Gaseinlassdüse (3) umfassst, die so ausgestaltet ist, dass sie in einer Zylinderwand (41) eines Zylinders (4) der Hubkolbenbrennkraftmaschine derart anordenbar ist, dass ein als Treibstoff bereitgestelltes Brenngas (5) im Einbauzustand des Gaszuführsystems mittels der Gaseinlassdüse (3) einem Brennraum (42) des Zylinders (4) zuführbar ist, wobei das Gaseinlassventil (2) einen in einem Ventilgehäuse (21) angeordneten Druckraum (22) umfasst, in welchem das Brenngas (5) über eine Gaszuführung (23) zur Bevorratung und Zufuhr in die Gaseinlassdüse (3) im Betriebszustand bereitgestellt werden kann, und im Druckraum (22) ein Gaseinlassventil (6) mit einem an einem Ventilschaft (61) angeordneten Ventilteller (62) sowie einem Ventilsitz (63) vorgesehen ist, welcher Ventilsitz (63) in einem geschlossenen Zustand des Gaseinlassventils (6) mit dem Ventilteller (2) derart dichtend zusammenwirkt, dass die Zufuhr des Brenngases (5) aus dem Druckraum (22) in die Gaseinlassdüse (3) unterbunden ist, und der Ventilteller (2) mittels eines mit dem Ventilschaft (61) wirkverbundenen Ventilantriebs (7) vom Ventilsitz (3) abhebbar ist, so dass das Brenngas (5) in einem geöffneten Zustand des Gaseinlassventils (6) aus dem Druckraum (22) am Ventilteller (2) vorbei der Gaseinlassdüse (3) zuführbar ist, **dadurch gekennzeichnet, dass** der Ventilschaft (61) in einer Führungsbohrung (91) eines Schaftgehäuses (9) geführt ist und die Führungsbohrung (91) mit einem unter einem Abdichtdruck (PA) stehenden Hydrauliköl (10) beaufschlagbar ist, welcher Abdichtdruck (PA) bevorzugt höher ist als ein Brenngasdruck (BG) des Brenngases (5) im Druckraum (22), so dass ein Eindringen des Brenngases (5) in den Ventilschaft (61) im Wesentlichen verhinderbar ist.

2. Gaszuführsystem nach Anspruch 1, wobei der Ventilantrieb (7) zum Antrieb des Ventilschafts (61) ein mechanischer, elektrischer, oder pneumatischer Ventilantrieb (7), insbesondere ein hydraulischer Ventilantrieb (7) ist.

3. Gaszuführsystem nach einem der Ansprüche 1 oder 2, wobei zum Schliessen des Gaseinlassventils (6) eine gegen den Ventilantrieb (7) wirkende Rückstelleinrichtung (8), insbesondere in Form einer Rückstellfeder (81) vorgesehen ist.

4. Gaszuführsystem nach einem der vorangehenden Ansprüche, wobei zur Überwachung eines Brenngasflusses in den Brennraum (42) ein Kontrollsystem zur Bestimmung einer Position des Gaseinlassventils (6) vorgesehen ist.

5. Gaszuführsystem nach Anspruch 4, wobei das Kontrollsystem ein Wegsensor ist, insbesondere ein elektrischer oder elektromagnetischer Wegsensor, im Speziellen ein induktiver, kapazitiver oder optischer Wegsensor ist.

6. Gaszuführsystem nach einem der Ansprüche 4 oder 5, wobei das Kontrollsystem mit einer Überwachungseinheit signalverbunden ist und die Position des Gaseinlassventils (6) im Betriebszustand von der Überwachungseinheit erfasst werden kann, so dass eine Brenngaszufuhr zur Gaseinlassdüse (3) in Abhängigkeit von einem Kurbelwinkel der Hubkolbenbrennkraftmaschine und / oder in Abhängigkeit von einer Stellung eines Gaswechselventils der Hubkolbenbrennkraftmaschine unterbunden werden kann.

7. Gaszuführsystem nach einem der vorangehenden Ansprüche, wobei die Gaseinlassdüse (3) lösbar mit dem Gaseinlassventil (2) und austauschbar mit der Zylinderwand (41) verbunden ist und eine Düsenachse (D) der Gaseinlassdüse (3) derart unter einem vorgebbaren Winkel (α) in Bezug auf eine Ventilachse (V) des Gaseinlassventils (2) angeordnet ist, dass das Brenngas (5) im Betriebs- und Einbauzustand des Gaszuführsystems unter einem von Null verschiedenen vorgebbaren Einspritzwinkel (β) in Bezug auf eine radiale Richtung (R) und / oder in Bezug auf eine axiale Richtung (A) des Zylinders (4) in den Brennraum (42) des Zylinder (4) einspritzbar ist.

8. Gaszuführsystem nach Anspruch 7, wobei die Gaseinlassdüse (3) eine Mehrzahl an Düsenöffnungen (31) aufweist.

9. Gaszuführsystem nach Anspruch 8, wobei zwei Düsenöffnungen (31) derart verschieden ausgerichtet sind, dass das Brenngas (5) unter zwei verschiedenen Einspritzwinkeln in den Brennraum (42) einbringbar ist.

10. Gaszuführsystem nach einem der Ansprüche 8 oder 9, wobei zwei Düsenöffnungen (31) derart verschieden ausgebildet sind, dass das Brenngas (5) durch die zwei Düsenöffnungen (31) mit zwei verschiedenen Einspritzmengen und / oder mit zwei verschiedenen Strömungsgeschwindigkeiten und / oder mit zwei verschiedenen Strahlgeometrien in den Brennraum (42) einbringbar ist.

11. Zylinder, insbesondere Zylinderliner eines längsbespülten Zweitakt-Grossdieselmotors mit einem Gaszuführsystem (1) nach einem der Ansprüche 1 bis 10.

12. Zylinder nach Anspruch 11, wobei das Gaszuführsystem (1) am Zylinder (4) in einem Bereich zwischen einem oberen Totpunkt und einem unteren Totpunkt eines Kolbens der Hubkolbenbrennkraftmaschine vorgesehen ist, im Speziellen in einem Bereich des Zylinders (4), der vom oberen Totpunkt oder vom unteren Totpunkt 20% bis 80%, bevorzugt 40% bis 60%, besonders bevorzugt ca. 50% des Abstands zwischen oberem Totpunkt und unterem Totpunkt entfernt ist.

13. Hubkolbenbrennkraftmaschine mit einem Gaszuführsystem nach einem der Ansprüche 1 bis 10 und einem Zylinder nach einem der Ansprüche 11 oder 12, wobei die Hubkolbenbrennkraftmaschine ein Dual-Fuel Motor zur Verbrennung des Brenngases (5) und alternativ zur Verbrennung eines weiteren Brennstoffs, insbesondere zur Verbrennung von Diesel oder Schweröl ist.

14. Verfahren zum Betreiben einer Hubkolbenbrennkraftmaschine nach Anspruch 13 wobei eine Fehlfunktion des Gaszuführsystems (1) detektiert wird, die Brenngaszufuhr zum Gaszuführsystem (1) unterbunden wird und die Hubkolbenbrennkraftmaschine bevorzugt automatisch abgeschaltet, besonders bevorzugt automatisch auf einen Betrieb mit einem alternativen Brennstoff wie beispielweise Dieselöl oder Schweröl umgeschaltet wird.
